# EUROPEAN PATENT SPECIFICATION

(11) **EP 1 437 314 B1**
(45) Date of publication and mention of the grant of the patent: **21.03.2007**
(21) Application number: 03000260.4
(22) Date of filing: 08.01.2003
(51) Int. Cl.: B65G 47/90, B65G 57/22, B66C 1/28

(54) **Method and apparatus for the automatic palletization of objects**
Verfahren und Vorrichtung zur automatischen Palletisierung von Gegenständen
Procédé et appareil pour la palettisation automatique d'articles

(43) Date of publication of application: 14.07.2004
(73) Proprietor: Studio Tecnico Commerciale Morelli & C. S.a.s., 51100 Pistoia PT (IT)
(72) Inventor: Morelli, Massimo, 51100 Pistoia PT (IT)
(74) Representative: Celestino, Marco

(56) References cited:
- DE-A- 1 756 152
- DE-A- 3 540 121
- DE-A- 3 817 013
- JP-A- 5 305 927
- JP-A- 8 081 056
- JP-A- 58 139 926
- NL-A- 9 101 951
- NL-A- 9 201 292
- US-A- 1 693 074
- US-A- 5 066 189
- US-A- 5 338 150
- US-A- 5 630 695

## Description

### Field of the invention

The present invention relates to a method for operating and controlling the gripping hands of an automatic apparatus suitable for gripping, displacing and delivering objects.

Furthermore, the invention relates to an apparatus for palletising objects coming from an automatic production line.

### Description of the prior art

The use is common of robots within production cycles for various applications. Palletization systems, in particular, are often equipped with robots having a wrist with several degrees of freedom. To the wrist at least one gripping device is connected with clamps or "hands" for automatically positioning the objects by putting them adjacent to each other and in many layers.

The robots used for palletization of objects that come from automatic production lines are usually located in a palletization area and can also assist at the same time several conveyors.

The robots, which are usually anthropomorphic, Cartesian or polar, work at a palletization speed according to the carrying capacity of the wrist, to the trajectories and to any additional actions to perform. Therefore, to improve the speed the hands of the robot must be light, so that the objects to manipulate are the main part of the load on the wrist. The gripping hands, furthermore, must grip and release the object with precision and quickly.

The mechanisms of the gripping hands, however, have some technical limits that affect the quality of the manipulation.

In particular, in case of pneumatic drive, the usually flat hands have fixed opening/closing stroke independently from the size of the object to load; in particular, if the size range of the objects to manipulate varies much, for example for palletization of objects of different shape, when handling the objects of minimum size the hands must open like for objects of maximum size, thus effecting a long idle portion of the stroke before gripping the object.

Furthermore, the flat gripping hands, in their opening/closing stroke, push on the objects without a sufficient dampening, thus causing its deformation or break; this drawback is present mainly in presence of packages that have air inside, for example boxes of pasta, which cannot resist to the pressure of the gripping hands beyond certain limits.

Another drawback of such apparatus is owing to the not correct locating the gripping hands with respect to the package, which that then can be accidentally released unintentionally, thus falling down and breaking as well as scattering the content.

To overcome this drawback, L-shaped gripping hands exist that are positioned with a portion under the package, thus supporting it.

However, also in this case there is the need of carrying objects having sizes within a narrow range. This makes the apparatus not collapsible versus the objects size, thus remarkably limiting the applicability. In particular, with L-shaped gripping hands the capacity is limited of loading the pallet completely. In fact, an exit space has to be left for allowing the horizontal part of the L hands to withdraw. This causes the pallet to be loaded not in an optimal way, normally 70% of the maximum capacity.

Furthermore, the existing apparatus do not allow to handle collapsible packages, for example sacks of pasta, of flour or of other bulk products, which while carried can change their shape, thus loosening the grip on the sack and causing it to be released.

Therefore, the above drawbacks strongly limit the fields of application of the existing apparatus and limit the speed of the palletization process.

NL9101951 describes an apparatus for palletizing and stacking sacks that has a gripping device that approaches laterally the sacks with an elongated element having a first portion and a second portion. The second portion moves then under the sack by means of a relative rotation between the first and the second portion. This apparatus, however, has a stiff second portion.

DE3817013 also describes a method conform to the preamble of claim 1 and an apparatus conform to the preamble of claim 9, for palletizing and stacking sacks that has a gripping device with a plurality of segments or "phalanxes" in a row, capable of fitting and adapting to the size and the shape of the sacks. The segments or "phalanxes" are free from one another and are rotated with respect to each other by pulling a tendon that also bears all the load.

### Summary of the invention

It is therefore object of the present invention to provide a method for operating and controlling the gripping hands or clamps of an automatic apparatus for handling objects that has not the drawbacks of the existing devices.

It is another object of the present invention to provide a method for carrying out the palletization process at high speed.

It is a particular object of the invention to provide a method for handling collapsible packages, for example sacks of pasta, of flour or of other bulk products.

It is a further object of the present invention to provide a gripping device of objects along packaging and palletization lines capable of adapting easily to the shape and to the size of the carried objects, obtaining an apparatus with high flexibility and suitable for handling collapsible packages.

These and other objects are achieved by the method for operating and controlling the gripping hands of an automatic apparatus suitable for gripping, displacing and delivering objects of claim 1.

The relative rotation between said first and said second portion is obtained by a plurality of relative rotations of a plurality of segments or "phalanxes" in a row. This gives high flexibility to the picking up step, according to the invention, which can be carried out during palletization of objects having different size and shape, since the elongated elements, "articulated" as above described, are capable of fitting and adapting to the size and the shape of the processed objects, even in case the objects are collapsible, for example sacks containing bulk material.

The means for actuating the rotation of the first and the second portion comprise preferably a tendon, connected to a predetermined segment of the elongated element for causing the mutual rotation of said segments or phalanxes about the respective hinges, pulled by an actuator at the other end, the tendon extending eccentrically to the hinges that connect in turn the phalanxes.

Transferring the object to a palletization area comprises preferably releasing said or each object by the following steps:
- lowering the gripping hand until said or each elongated element at a lower portion thereof are in contact with the pallet or with an object located underneath already put on the pallet,
- releasing the second portion of said or each elongated element with respect to the first portion;
- lifting the gripping hand, whereby said or each elongated element slides laterally with respect to the object leaving it on the pallet or on the object located underneath.

The steps of picking up and transferring are repeated in turn on a plurality or groups of objects up to loading completely the pallet.

Advantageously, before the picking up step a centring step is provided of said or each gripping hand with respect to said object. This way it is possible to provide a steadier grip of the object and therefore to operate with high transferring speed.

In order to speed up further the palletization process, before the feeding step and upstream from the gripping station, the following steps may be provided:
- prearranging a first object in a plane of said conveyor;
- overlapping at least another object on said first object making at least one stack;
- picking up and transferring from said conveyor one or more stacks of objects.

Advantageously, said overlapping is obtained by a combination of a reciprocation of a plane of a conveyor and the feeding movement of another conveyor partially overlapped with respect to said plane. This combination of movements can be assisted by sensors of presence, for example optical sensors, associated to means for moving said objects on said conveyors to obtain the overlapping condition.

To facilitate the step of picking up said or each object a preliminary step can be provided of lifting said or each object by the plane of the conveyor, by means of a support movable orthogonally through the conveyor.

The transfer of sacks of product at the palletization area by the gripping hands can provide the following steps:
- delivering at least a first stack of sacks on a pallet preliminarily arranged in said palletization area;
- delivering at least a second stack of sacks on the said pallet distanced by said first stack of sacks;
- delivering at least one sack put "oriented vertically" between said first and said second stack of sacks;

The delivery of at least one sack put "oriented vertically" can occur by a relative rotation of the first and of the second portion of said or each elongated element only at a side of the sack, in order to leave it to fall laterally thus withdrawing its support action, said rotation causing in turn a rotation of said sack about the end of the second portion of said or each elongated element arranged at the other side of the sack and then its orientation in vertical allowing to fall "oriented vertically" between said first and said second stack of sacks already present on said pallet.

The objects of the invention are also achieved by the apparatus for palletising objects of claim 9.

Advantageously, the means for actuating the rotation of the first and the second portion comprise a tendon, connected to a predetermined segment of the elongated element for causing the mutual rotation of said segments or phalanxes about the respective hinges, pulled by an actuator at the other end, the tendon extending eccentrically to the hinges that connect in turn the phalanxes.

### Brief description of the drawings

Further characteristics and advantages of the method and of the device for automatic palletization of products, for example sacks, according to the present invention, will be made clearer with the following description of an embodiment thereof, exemplifying but not limitative, with reference to the further attached drawings wherein:
- figures from 1 to the 10 show diagrammatically a perspective view of a possible succession of steps of a preferred method;
- figures 11 and 12 show in detail the location of the gripping hands, with respect to the sacks of products, respectively in an elevational front view and a perspective view of from below;
- figure 13 shows a perspective view of a possible embodiment of an elongated element of a gripping hand;
- figures 14 and 15 show a cross sectional view, with respect to a plane comprising the elongated element and the relative actuator, of a possible device for operating the gripping hand;
- figures 16 and 17 show a perspective view the sacks put on a pallet by the gripping hands;
- figures from 18 to 20 show diagrammatically a particular type of palletization of sacks by the gripping hands.

### Description of a preferred embodiment

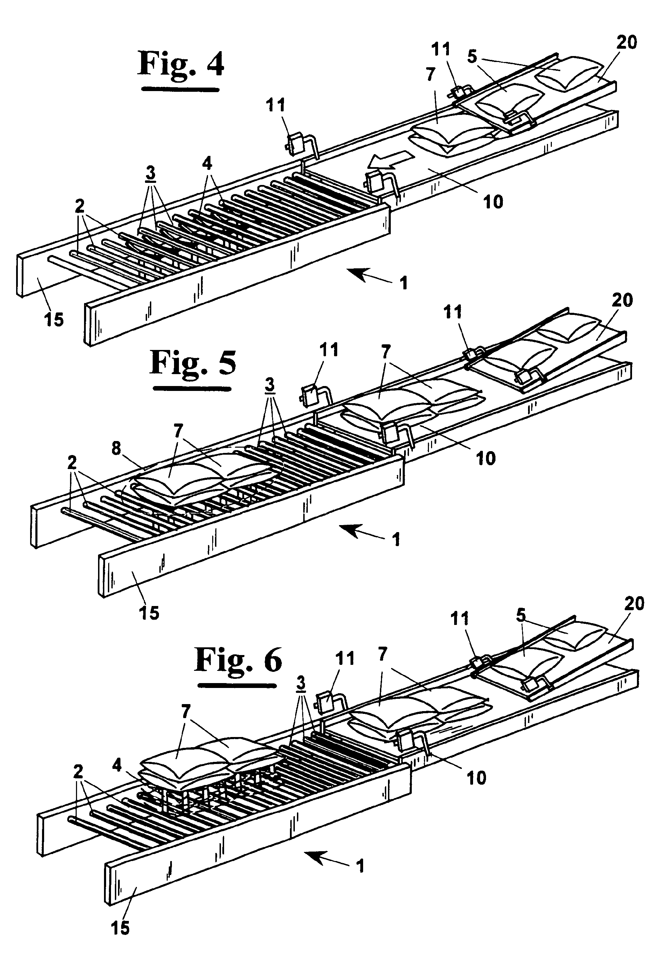

In figures from 1 to 10 a succession of steps is shown of the method for automatically palletising objects, such as for example products in sacks 5, on an automatic production line. Preliminarily, sacks 5 are arranged to form stacks 6 (figure 5) in order to increase the speed of the palletization process.

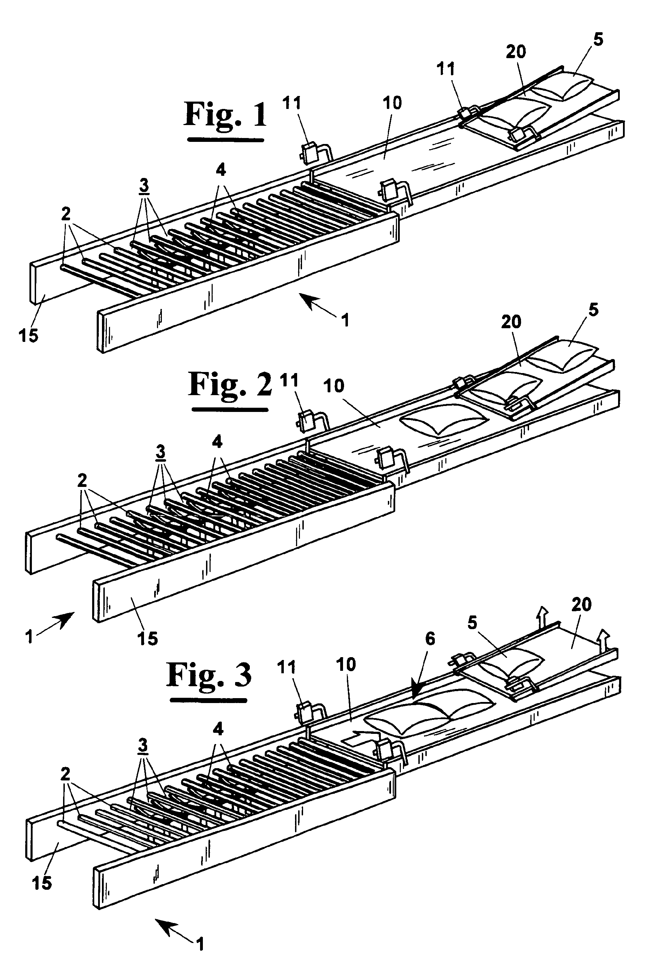

This occurs by a combination of relative movements between a first conveyor 10 and a second conveyor 20 partially overlapping the first. In particular, a first row of sacks 5 coming from the production line is arranged by second conveyor 20 onto first conveyor 10 (figure 3). A second row of sacks 5 is then put on the first row of sacks 5.

In particular, once achieved a predetermined number of sacks 5 for first row, the direction of movement of the first conveyor 10 is reversed (figure 3) and at the same time second conveyor 20 is stopped and raised of an amount that is about the height of a sack 5.

When the first row of sacks 5 is located correctly, the direction of movement of the first conveyor 10 is reversed again and second conveyor 20 starts again bringing the sacks 5 of the second row to overlap the sacks of the first row (figure 4) which are located underneath. The combination of movements as above described is made with the aid of sensors of presence 11, for example optical sensors in order to obtain stacks 7.

Stacks 7 of sacks 5 thus formed are transferred from the plane 10 onto a conveyor 1 comprising, for example, dragging rollers 2 separated by apertures 3. Conveyor 1 transfers stacks 7 to a gripping area defined diagrammatically in figure by a dotted line 8 (figure 5).

In gripping area 8 under conveyor 1 a support 4 is present, for example forming a cradle, having a plurality of elements that can translate orthogonally to the plane of conveyor 1 through apertures 3, from a first position, where they are arranged under conveyor 1 same (figure 4), and a position where they cross the plane of conveyor 1 raising from it stacks 7 of sacks 5 (figure 6).

Such step facilitates the next picking up step of stacks 7 by gripping hands 25a-25d, as described hereafter.

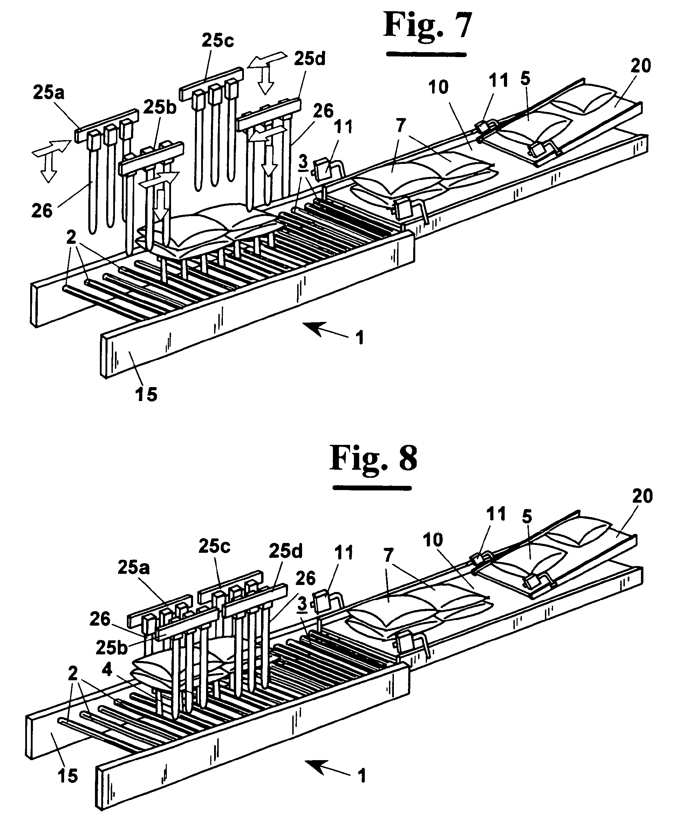

In the case shown in figures 7-10 four hands 25a-25d are provided arranged in couples at opposite sides with respect to sacks 5 and movable with respect to each other.

In particular, gripping hands 25a-25d have elongated ends 26, which by means of a combination of movements of the respective gripping hands are arranged between a starting position, where they are external to cradle support 4 (figure 7), and a position where they cross the cradle 4 same at the spaces set between the many parts thereof (figure 8).

Translating the gripping hands is carried out by a robotized head, for example that described in European Patent Application EP 1293307 A2, in the name of the same applicant, actuated by a screw or a belt on a respective guide and driven by step motors.

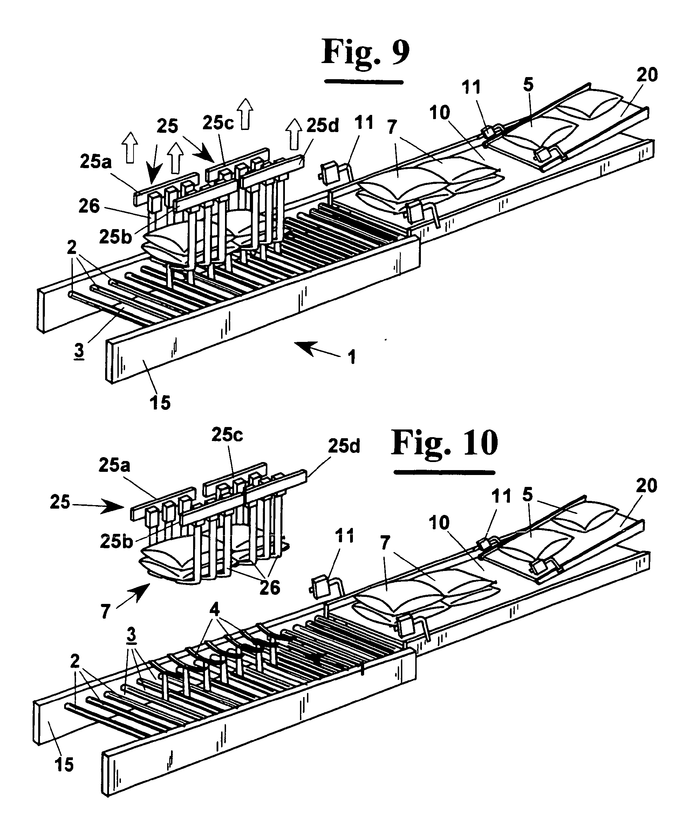

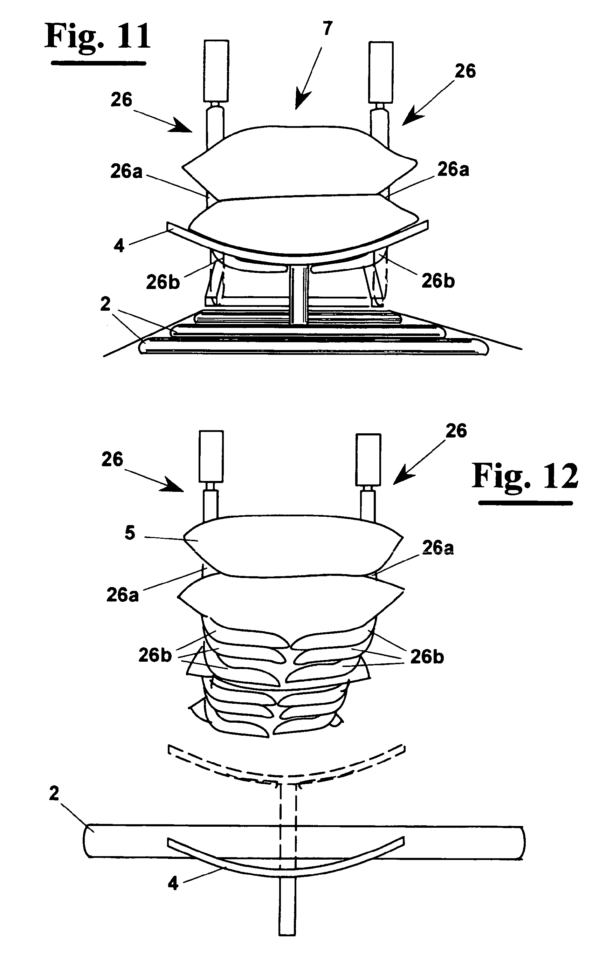

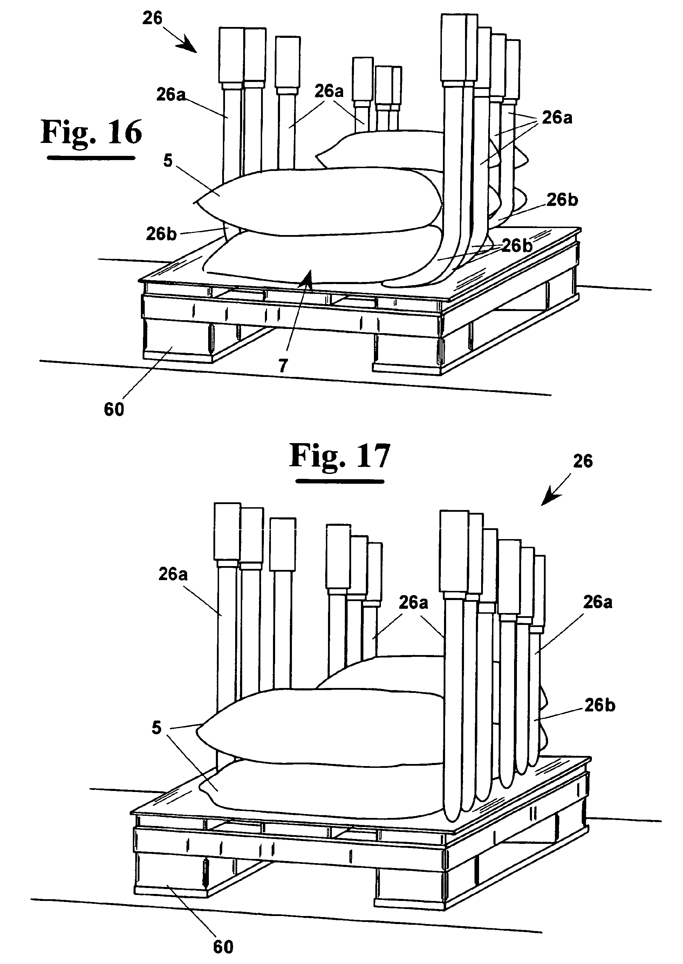

Then, as shown in figure 9 and in detail in the front view of figure 11, a portion 26b of elongated elements 26 rotates with respect to portion 26a and moves under the stacks 7. Then, gripping hands 25a-25d raise and move sacks 5, which are supported by portions 26b of elongated elements 26, away from conveyor 1 (figure 10 and 12) for then delivering them at a palletization area where pallets 60 are preliminarily arranged (figure 16 and 17).

The solution of rotating end portion 26b of elongated elements 26 with respect to portion 26a allows to pick up (figure 9 and 10) sacks 5 and then to position them (figure 16 and 17) onto pallet 60 gently and easily, thus avoiding the possibility of damaging the sacks or their content. In fact, once sacks 5 have been located onto pallet 60 the elements 26 are released in the starting position withdrawing them from under sacks 5 and avoiding to transmit them any forces, thus without damaging them.

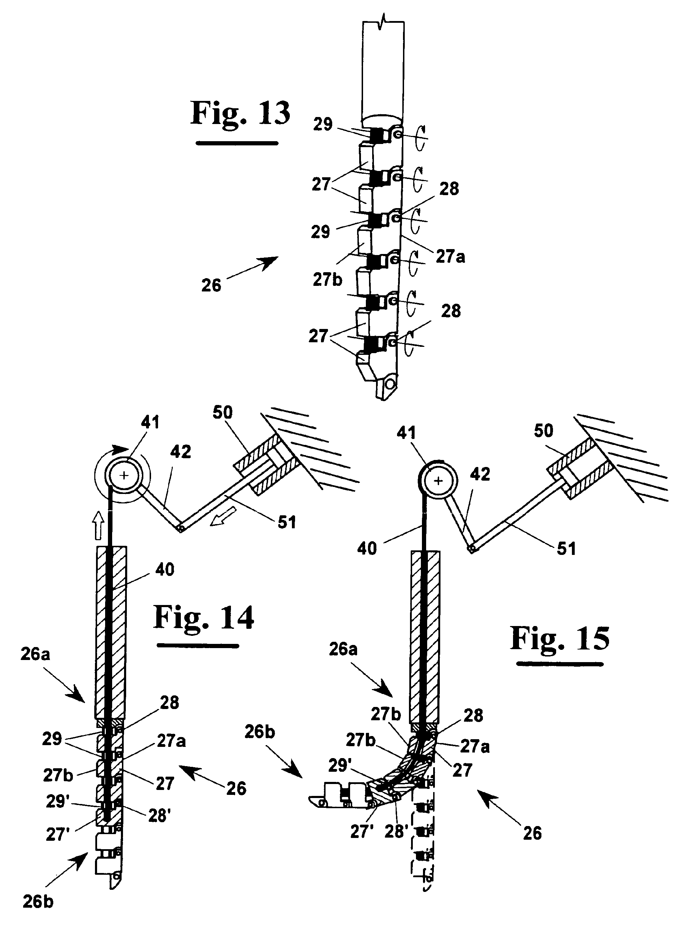

Handling sacks 5 by gripping hands 25a-25d is carried out easily since, as shown in figures 13, 14 and 15, each elongated element 26 comprises a plurality of segments or "phalanxes" 27 interconnected at an end 27a by means of hinges 28, about which segments 27 can rotate biased by springs 29.

In particular, segments 27 can rotate between a first position, where they are aligned (figure 14), and a second position, where the end 27b without hinges of two successive segments 27 are rotated (figure 15). The sum of the single relative rotations of segments 27 produces, then, a rotation between the first portion 26a and the second portion 26b of elongated element 26.

As shown in figures 14 and 15 in a cross sectional view, a predetermined segment 27' of elongated element 26 is connected to an end of a tendon 40. The tendon passes through all the segments preceding segment 27', along a line different from the line formed by hinges 28. This way, when tendon 40 is pulled, for example by means of a pneumatic actuator 50, segment 27' to which the tendon is connected starts to rotate about its hinge 28', biased by spring 29'. This causes a rotation about the respective hinges 28 also to segments 27 that are arranged upstream from segment 27'. On the other hand, segments 27 arranged downstream of segment 27' do not rotate about the respective hinges 28, but rotate as a stiff body, by means of abutments that prevent them to rotate back.

In other words segment 27' to which tendon 40 is connected divides elongated element 26 into two portions 26a and 26b that as above described are capable of rotating with respect to each other.

In an embodiment of the invention a single actuator 50 can operate all the elongated elements 26 of a gripping hand 25. In particular, the cables 40 coming from elongated elements 26 of a same gripping hand 25 are connected to a cylinder or "drum" 41 capable of rotating about its own axis. It is brought into rotation by actuator 50 through a rod 42 operatively connected to the stem 51 of actuator 50 same.

The steps of picking up (figures 1-10) and transferring (figures 16 and 17) are repeated in turn on a plurality of objects up to loading completely the pallet. In case of sacks of pasta, the head of the manipulator (see EP1293307), translating and rotating delivers in turn the sacks up to obtaining the maximum saturation of the pallet. The possibility for elongated elements of withdrawing from under the sacks allows to put two rows of sacks 5 parallel on a pallet practically to contact against each other.

In figures from 18 to 20 the operating steps are diagrammatically shown of the device of handling sacks 5 as above described for a particular type of palletization as described hereafter, for example suitable for large sacks with respect to the pallet, which if arranged all horizontally could not load completely the pallet, for example sacks of flour.

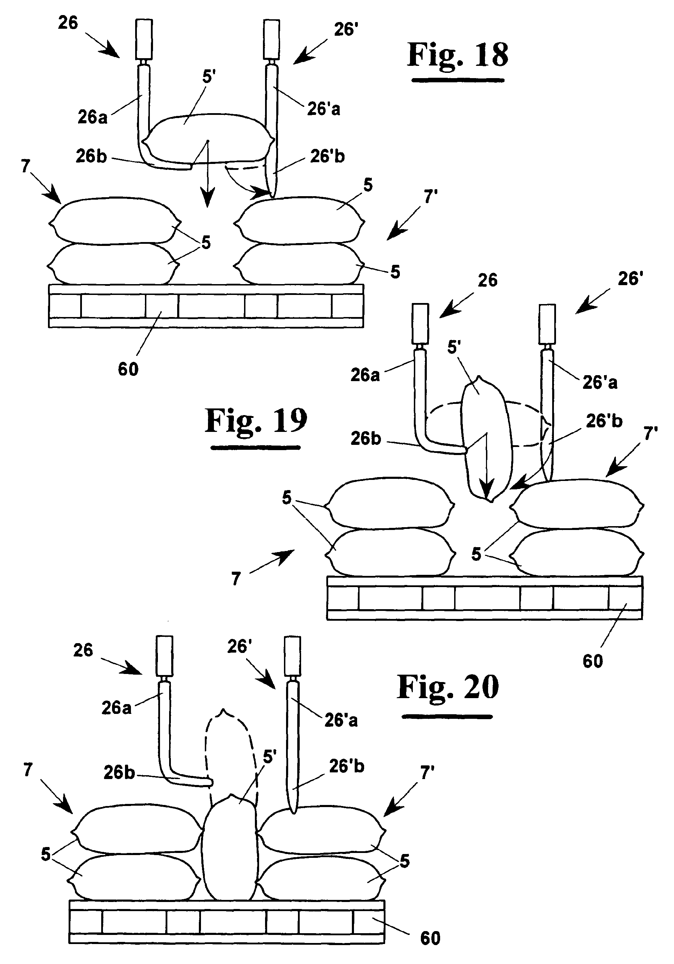

Preliminarily, on a pallet 60 two stacks 7 and 7' of sacks 5 are delivered, spaced from each other. Then, another sack 5' is delivered by the gripping hands in the space set between the two stacks 7 and 7'. In particular, the first series of elongated elements 26' at a same part of the sack 5' are, then, released up to become vertical ceasing their function of support (figure 18). Therefore, the sack 5' rotates by gravity about the ends of portions 26b of the second series of elongated elements 26 up to a vertical position (figure 19) remaining oriented vertically" between stacks 7 and 7' of sacks 5 (figure 20). This way, the space on pallet 60 loaded by sacks 5 is optimised, obtaining a rational and advantageous method of palletization, with high filling ratio of transportation vehicles.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention, which is defined by the appended claims. It is to be understood that the phraseology or terminology employed herein is for the purpose of description and not of limitation.

## Claims

1. Method for operating and controlling the gripping hands (25a-25d) of an automatic apparatus suitable for gripping, displacing and delivering objects, such as for example products in sacks (5) fed by an automatic production line, comprising the steps of:
- feeding on a conveyor (1) at least one object (5) in a gripping station;
- locating in said station at least one gripping hand comprising at least an elongated element (26) at said or each object (5);
- picking up said or each object (5) by said or each gripping hand and transferring it to a palletization area;
wherein said picking up step is carried out with a relative movement between said object (5) and said gripping hand, by approaching laterally a first portion (26a) of said or each elongated element (26) to said object (5) and positioning a second portion (26b) of said or each elongated element (26) under said object (5) by means of a relative rotation between said first (26a) and said second portion (26b), and
wherein the relative rotation between said first (26a) and said second portion (26b) is obtained by a plurality of relative rotations of a plurality of successive segments (27, 27') or "phalanges", **characterised in that**
said segments (27, 27') or "phalanxes" are interconnected at an end by means of hinges (28) about which said segments (27, 27') can rotate with respect to each other biased by springs (29) between a first position, where two successive segments (27, 27') are aligned, and a second position, where each successive segment (27, 27') is rotated with respect to each previous element.

2. Method according to claim 1, wherein said means for actuating the rotation of the first and of the second portion (26b) comprise a tendon (40) connected at an end to a predetermined segment (27, 27') of the elongated element (26) for causing the mutual rotation of said segments (27, 27') or phalanxes about the respective hinges (28) by pulling through an actuator the other end, the tendon (40) extending eccentrically to the hinges (28) that connect in turn the phalanxes.

3. Method according to claim 1, wherein said transferring to a palletization area comprises the delivery of said or each object (5) by the steps of:
- lowering the gripping hand until said or each elongated element (26) at a lower portion thereof contacts the pallet or an object (5) located underneath and previously put on the pallet,
- releasing the second portion (26b) of said or each elongated element (26) with respect to the first portion (26a);
- lifting the gripping hand, whereby said or each elongated element (26) slides laterally with respect to the object (5) leaving it on the pallet or on the object (5) located underneath.

4. Method according to claim 1, wherein before the feeding step, upstream from the gripping station, the following steps are provided:
- prearranging a first object (5) in a plane of said conveyor (1);
- overlapping at least another object (5) on said first object (5) making at least one stack (7) of objects;
- picking up and transferring from said conveyor (1) said or each stack (7) of objects.

5. Method according to claim 4, wherein said overlapping is obtained by a combination of a reciprocation of the plane of said conveyor (1) and the feeding movement of another conveyor (1) partially overlapped with respect to said plane.

6. Method according to claim 1, wherein to facilitate the step of picking up said or each object (5) a preliminary step of lifting said or each object (5) from the plane of the conveyor (1), by means of a support movable orthogonally through the conveyor (1) is provided.

7. Method according to claim 1, wherein said transferring objects (5) at the palletization area by the gripping hands (25a-25d) provides the following steps:
- delivering at least a first stack (7) of objects (5) on a pallet preliminarily arranged in said palletization area;
- delivering at least a second stack (7) of objects (5) on said pallet distanced from said first stack (7) of objects (5) ;
- delivering at least one object put "oriented vertically", between said first and said second stack (7) of objects (5) ;

8. Method according to claim 7, wherein said at least one object is put "oriented vertically" by a rotation of the first portion (26a) relative to the second portion (26b) of said or each elongated element (26) only at a side of the object, in order to leave it to fall laterally thus withdrawing the support action, said rotation causing in turn a rotation of said object about the end of the second portion (26b) of said or each elongated element (26) arranged at the other side of the object and then its orientation allowing it to fall "oriented vertically" between said first and said second stack (7) of objects (5) already present on said pallet.

9. An apparatus for palletising objects coming from an automatic production line, such as for example products in sacks (5), comprising at least one gripping hand suitable for gripping, displacing and delivering objects having at least an elongated element (26) with a first portion (26a) that approaches laterally said object (5) and a second portion (26b) that is positioned under said object (5) by means of a relative rotation between said first (26a) and said second portion (26b),
wherein at least a first and at least a second gripping hand are provided, arranged at opposite sides with respect to said or each object, that can move towards/away from each other and along parallel directions,
wherein said relative rotation between said first (26a) and said second portion (26b) is operated by actuating means and biased by resilient means (29), whereby when said actuating means are released each elongated element (26) tends to become straight,
and wherein each elongated element (26) comprises at least in a portion thereof a plurality of segments (27, 27') or "phalanxes", which can rotate with respect to each other to obtain said relative rotation between said first (26a) and said second portion (26b), **characterised in that** said segments (27, 27') or "phalanxes" are interconnected at an end by means of hinges (28) about which said segments (27, 27') can rotate with respect to each other biased by springs (29) between a first position, where two successive segments (27, 27') are aligned, and a second position, where each successive segment (27, 27') is rotated with respect to each previous element.

10. Apparatus according to claim 9, wherein said means for actuating the rotation of the first and of the second portion (26b) comprise a tendon (40) connected at an end to a predetermined segment (27, 27') of the elongated element (26b) for causing the mutual rotation of said segments (27, 27') or phalanxes about the respective hinges (28) by pulling through an actuator the other end, the tendon (40) extending eccentrically to the hinges (28) that connect in turn the phalanxes (27, 27').

## Patentansprüche

1. Verfahren zum Betrieb und zur Steuerung der Greiferhände (25a-25d) einer automatischen Vorrichtung, geeignet zum Greifen, Versetzen und Ablegen von Objekten, wie zum Beispiel von Produkten in Säcken (5), beschickt von einer automatischen Produktionslinie, umfassend die Schritte:
- Einführen auf einem Förderband (1) wenigstens eines Objekts (5) in eine Greiferstation;
- Positionieren in der Station wenigstens einer Greiferhand, umfassend wenigstens ein verlängertes Element (26) an dem oder jedem Objekt (5);
- Aufnehmen des oder jedes Objekts (5) durch die oder jede Greiferhand und Transportieren des Objekts zu einem Palettierbereich;
wobei der Schritt des Aufnehmens ausgeführt wird mit einer relativen Bewegung zwischen dem Objekt (5) und der Greiferhand, durch seitliches Annähern eines ersten Abschnitts (26a) des oder jedes verlängerten Elements (26) an das Objekt (5) und durch Positionieren eines zweiten Abschnitts (26b) des oder jedes verlängerten Elements (26) unter dem Objekt (5) mittels einer relativen Drehung zwischen dem ersten (26a) und dem zweiten Abschnitt (26b),
und wobei die relative Drehung zwischen dem ersten (26a) und dem zweiten Abschnitt (26b) erreicht wird durch mehrere relative Drehungen mehrerer aufeinander folgender Segmente (27, 27') oder "Fingerglieder", **dadurch gekennzeichnet, dass**
die Segmente (27, 27') oder "Fingerglieder" an einem Ende miteinander mittels Gelenke (28) verbunden sind, um die die Segmente (27, 27') bezogen aufeinander drehbar sind, vorgespannt mit Federn (29), zwischen einer ersten Position, in der zwei aufeinander folgende Segmente (27, 27') ausgerichtet sind, und einer zweiten Position, in der jedes der aufeinander folgenden Segmente (27, 27'), jeweils bezogen auf das Element davor, gedreht ist.

2. Verfahren nach Anspruch 1, wobei das Mittel zur Betätigung der Drehung des ersten und des zweiten Abschnitts (26b) eine Sehne (40) umfasst, an einem Ende verbunden mit einem vorherbestimmten Segment (27, 27') des verlängerten Elements (26) zum Auslösen der wechselseitigen Drehung der Segmente (27, 27') oder "Fingerglieder" um die jeweiligen Gelenke (28) durch Ziehen des anderen Endes durch ein Betätigungsorgan, wobei die Sehne (40) exzentrisch verläuft zu den Gelenken (28), die wiederum die "Fingerglieder" verbinden.

3. Verfahren nach Anspruch 1, wobei das Transportieren zu einem Palettierbereich das Ablegen des oder jedes Objekts (5) umfasst, durch die Schritte:
- Niederlassen der Greiferhand bis das oder jedes verlängerte Element (26) an seinem unteren Abschnitt die Palette oder ein Objekt (5) berührt, das sich darunter befindet und zuvor auf die Palette gebracht worden ist;
- Lösen des zweiten Abschnitts (26b) des oder jedes verlängerten Elements (26) bezogen auf den ersten Abschnitt (26a) :
- Hochheben der Greiferhand, wobei das oder jedes verlängerte Element (26) bezogen auf das Objekt (5) seitlich gleitet und das Objekt auf der Palette oder auf dem darunter befindlichen Objekt (5) zurücklässt.

4. Verfahren nach Anspruch 1, wobei, vor dem Schritt des Einführens, von der Greiferstation bandaufwärts, die folgenden Schritte vorgesehen sind:
- Vorbereiten eines ersten Objekts (5) in einer Ebene des Förderbandes (1);
- Auflegen wenigstens eines weiteren Objekts (5) auf das erste Objekt (5) als Aufbau wenigstens eines Stoßes (7) von Objekten;
- Hochheben und Transportieren von dem Förderband (1) des oder jedes Stoßes (7) von Objekten.

5. Verfahren nach Anspruch 4, wobei das Aufliegen erreicht wird durch eine Kombination einer Hin- und Herbewegung der Ebene des Förderbandes (1) und der Einführbewegung eines anderen Förderbandes (1), der bezogen auf die Ebene, teilweise darüber liegt.

6. Verfahren nach Anspruch 1, wobei zur Erleichterung des Schrittes des Aufnehmens des oder jedes Objekts (5) ein vorausgehender Schritt des Hochhebens des oder jedes Objekts (5) von der Ebene des Förderbandes (1) mittels einer orthogonal durch das Förderband (1) beweglichen Unterstützung vorgesehen ist.

7. Verfahren nach Anspruch 1, wobei das Transportieren der Objekte (5) im Palettierbereich durch die Greiferhände (25a-25d) die folgenden Schritte vorsieht:
- Ablegen wenigstens eines ersten Stoßes (7) von Objekten (5) auf einer in dem Palettierbereich vorbereiteten Palette;
- Ablegen wenigstens eines zweiten Stoßes (7) von Objekten (5) auf der Palette in einem Abstand von dem ersten Stoß (7) von Objekten (5);
- Ablegen wenigstens eines Objekts, das "vertikal orientiert" zwischen den ersten und den zweiten Stoß (7) von Objekten (5) gebracht wird.

8. Verfahren nach Anspruch 7, wobei wenigstens ein Objekt in "vertikal orientierte" Position gebracht wird durch Drehung des ersten Abschnitts (26a) relativ zu dem zweiten Abschnitt (26b) des oder jedes verlängerten Elements (26) an nur einer Seite des Objekts, um es seitlich fallen zu lassen, wobei die Stützwirkung aufgehoben wird, wobei die Drehung wiederum eine Drehung des Objekts um das Ende des zweiten Abschnitts (26b) des oder jedes verlängerten Elements (26) auslöst, das auf der anderen Seite des Objekts angeordnet ist und so durch seine Orientierung ermöglicht, dass das Objekt "vertikal orientiert" zwischen den ersten und den zweiten Stoß (7) von Objekten (5) fällt, die bereits auf der Palette vorhanden sind.

9. Vorrichtung zum Palettieren von Objekten, die aus einer automatischen Produktionslinie kommen, wie zum Beispiel Produkte in Säcken (5), umfassend wenigstens eine Greiferhand, die geeignet ist zum Greifen, Versetzen und Ablegen von Objekten, die wenigstens ein verlängertes Element (26) hat, mit einem ersten Abschnitt (26a), der sich dem Objekt (5) seitlich nähert, und einem zweiten Abschnitt (26b), der unter das Objekt (5) positioniert wird mittels einer relativen Drehung zwischen dem ersten (26a) und dem zweiten Abschnitt (26b),wobei wenigstens eine erste und wenigstens eine zweite Greiferhand vorgesehen sind, an gegenüberliegenden Seiten angeordnet bezogen auf das oder jedes Objekt, die sich aufeinander zu /voneinander weg bewegen können und in parallele Richtung, wobei die relative Drehung zwischen dem ersten (26a) und dem zweiten Abschnitt (26b) von einem Betätigungsorgan ausgeführt wird und vorgespannt ist mit Federn (29), wobei, wenn die Betätigungsorgane gelöst sind, jedes verlängerte Element (26) zu gerader Ausrichtung tendiert, und wobei jedes verlängerte Element (26) wenigstens in einem Abschnitt des Elements mehrere Segmente (27, 27') oder "Fingerglieder" umfasst, die aufeinander bezogen drehbar sind, um die relative Drehung zu erreichen, zwischen dem ersten (26a) und dem zweiten Abschnitt (26b), **dadurch gekennzeichnet, dass** die Segmente (27, 27') oder "Fingerglieder" an einem Ende miteinander mittels Gelenke (28) verbunden sind, um welche die Segmente (27, 27') bezogen aufeinander drehbar sind, vorgespannt mit Federn (29), zwischen einer ersten Position, in der zwei aufeinander folgende Segmente (27, 27') ausgerichtet sind, und einer zweiten Position, in der jedes der aufeinander folgenden Segmente (27, 27'), jeweils bezogen auf das Element davor, gedreht ist.

10. Vorrichtung nach Anspruch 9, wobei das Mittel zur Betätigung der Drehung des ersten und des zweiten Abschnitts (26b) eine Sehne (40) umfasst, an einem Ende verbunden mit einem vorherbestimmten Segment (27, 27') des verlängerten Elements (26b) zum Auslösen der wechselseitigen Drehung der Segmente (27, 27') oder "Fingerglieder" um die jeweiligen Gelenke (28) durch Ziehen des anderen Endes durch ein Betätigungsorgan, wobei die Sehne (40) exzentrisch verläuft zu den Gelenken (28), die ihrerseits die "Fingerglieder" (27, 27') verbinden.

## Revendications

1. Procédé d'actionnement et de commande des poignées de préhension (25a-25d) d'un appareil automatique adapté pour la préhension, le déplacement et le déchargement d'objets, tels que des produits en sacs (5) par exemple, alimentés par une ligne de production automatique, comprenant les étapes suivantes :
- déposer sur un transporteur (1) au moins un objet (5) à un poste de préhension ;
- positionner dans ledit poste au moins une poignée de préhension comprenant au moins un élément allongé (26) sur ledit objet (5) ou sur chacun d'entre eux ;
- soulever ledit objet (5) ou chacun d'entre eux au moyen de ladite poignée de préhension ou de chacune d'entre elles et le transférer vers la zone de palettisation ;
dans lequel l'étape de soulèvement est effectuée par un mouvement relatif entre ledit objet (5) et ladite poignée de préhension, en approchant latéralement une première partie (26a) dudit élément allongé (26) ou de chacun d'entre eux vers ledit objet (5) et en positionnant une seconde partie (26b) dudit élément allongé (26) ou de chacun d'entre eux sous ledit objet (5) au moyen d'une rotation relative entre ladite première (26a) et ladite seconde partie (26b), et
dans lequel la rotation relative entre ladite première (26a) et ladite seconde partie (26b) est obtenue par une pluralité de rotations relatives d'une pluralité de segments successifs (27, 27') ou « phalanges », **caractérisé en ce que**
lesdits segments (27, 27') ou « phalanges » sont reliés entre eux à une extrémité au moyen de charnières (28) autour desquelles lesdits segments (27, 27') peuvent tourner l'un par rapport à l'autre rappelés par des ressorts (29) entre une première position, dans laquelle deux segments successifs (27, 27') sont alignés, et une seconde position, dans laquelle chaque segment successif (27, 27') tourne par rapport à chaque élément précédent.

2. Procédé selon la revendication 1, dans lequel ledit moyen pour actionner la rotation de la première et de la seconde partie (26b) comprend un tendon (40) relié par une extrémité à un segment prédéterminé (27, 27') de l'élément allongé (26) afin de permettre la rotation mutuelle desdits segments (27, 27') ou phalanges autour des charnières respectives (28) en tirant l'autre extrémité à travers un actionneur, le tendon (40) s'étendant de manière excentrique par rapport aux charnières (28), reliées à leur tour aux phalanges.

3. Procédé selon la revendication 1, dans lequel ledit transfert vers une zone de palettisation comprend le déchargement dudit objet (5) ou de chacun d'entre eux selon les étapes suivantes :
- abaisser la poignée de préhension jusqu'à ce que ledit élément allongé (26) ou chacun d'entre eux, à une partie inférieure de celle-ci, viennent en contact avec la palette ou un objet (5) situé au-dessous et déposé précédemment sur la palette,
- libérer la seconde partie (26b) dudit élément allongé (26) ou de chacun d'entre eux par rapport à la première partie (26a) ;
- lever la poignée de préhension, moyennant quoi ledit élément allongé (26) ou chacun d'entre eux glisse latéralement par rapport à l'objet (5) le laissant sur la palette ou sur l'objet (5) situé au-dessous.

4. Procédé selon la revendication 1, dans lequel avant l'étape d'alimentation, en amont du poste de préhension, les étapes suivantes sont prévues :
- agencer au préalable un premier objet (5) dans un plan dudit transporteur (1) ;
- recouvrir ledit premier objet (5) d'au moins un autre objet en faisant au moins une pile (7) d'objets ;
- soulever et transférer ladite pile (7) d'objets ou chacune d'entre elles depuis le transporteur.

5. Procédé selon la revendication 4, dans lequel ledit recouvrement est obtenu par une combinaison d'un mouvement alternatif du plan dudit transporteur (1) et du mouvement d'alimentation d'un autre transporteur (1) partiellement recouvert par rapport audit plan.

6. Procédé selon la revendication 1, dans lequel une étape préliminaire de soulèvement dudit objet (5) ou de chacun d'entre eux depuis le plan du transporteur (1), au moyen d'un support déplaçable de manière orthogonale à travers le transporteur (1), est prévue pour faciliter l'étape de soulèvement dudit objet (5) ou de chacun d'entre eux.

7. Procédé selon la revendication 1, dans lequel ledit transfert des objets (5) dans la zone de palettisation par les poignées de préhension (25a-25d) comprend les étapes suivantes:
- décharger au moins une première pile (7) d'objets (5) sur une palette agencée au préalable dans la zone de palettisation ;
- décharger au moins une seconde pile (7) d'objets (5) sur ladite palette à distance de ladite première pile (7) d'objets (5) ;
- décharger au moins un objet disposé de manière « orientée verticalement» entre ladite première et ladite seconde pile (7) d'objets (5) ;

8. Procédé selon la revendication 7, dans lequel au moins un objet est disposé de manière « orientée verticalement » par une rotation de la première partie (26a) par rapport à la seconde partie (26b) dudit élément allongé (26) ou de chacun d'entre eux seulement d'un côté de l'objet, afin de le laisser tomber latéralement en supprimant l'action de support, ladite rotation entraînant à son tour une rotation dudit objet autour de l'extrémité de la seconde partie (26b) dudit élément allongé (26) ou de chacun d'entre eux, agencé de l'autre côté de l'objet, son orientation lui permettant ensuite de tomber de manière « orientée verticalement » entre ladite première et ladite seconde pile (7) d'objets (5) déjà présents sur ladite palette.

9. Appareil pour la palettisation d'objets issus d'une ligne de production automatique, tels que des produits en sacs par exemple (5), comprenant au moins une poignée de préhension adaptée pour la préhension, le déplacement et le déchargement d'objets ayant au moins un élément allongé (26) avec une première partie (26a) qui s'approche latéralement dudit objet (5) et une seconde partie (26b) positionnée sous ledit objet (5) au moyen d'une rotation relative entre ladite première (26a) et ladite seconde partie (26b),
dans lequel au moins une première et au moins une seconde poignée de préhension sont prévues, agencées en des côtés opposés par rapport audit objet ou à chacun d'entre eux, pouvant se déplacer l'une vers l'autre/s'éloigner l'une de l'autre selon des directions parallèles,
dans lequel ladite rotation relative entre la première (26a) et la seconde partie (26b) est initiée par le moyen d'actionnement et rappelée par le moyen élastique (29), chaque élément allongé (26) ayant tendance à devenir droit lorsque ledit moyen d'actionnement est libéré,
et dans lequel chaque élément allongé (26) comprend au moins dans une partie de celui-ci une pluralité de segments (27, 27') ou « phalanges », pouvant tourner les uns par rapport aux autres pour obtenir ladite rotation relative entre ladite première (26a) et ladite seconde partie (26b),
**caractérisé en ce que** lesdits segments (27, 27') ou « phalanges » sont reliés entre eux à une extrémité au moyen de charnières (28) autour desquelles lesdits segments (27, 27') peuvent tourner les uns par rapport aux autres rappelés par des ressorts (29) entre une première position dans laquelle deux segments successifs (27, 27') sont alignés, et une seconde position dans laquelle chaque segment successif (27, 27') tourne par rapport à chaque élément précédent.

10. Appareil selon la revendication 9, dans lequel ledit moyen pour actionner la rotation de la première et de la seconde partie (26b) comprend un tendon (40) relié par une extrémité à un segment prédéterminé (27, 27') de l'élément allongé (26b) afin de permettre la rotation mutuelle desdits segments (27, 27') ou phalanges autour des charnières respectives (28) en tirant l'autre extrémité à travers un actionneur, le tendon (40) s'étendant de manière excentrique par rapport aux charnières (28) reliées à leur tour aux phalanges (27, 27').
